# EUROPÄISCHE PATENTSCHRIFT

(11) **EP 3 515 783 B1**
(45) Veröffentlichungstag und Bekanntmachung des Hinweises auf die Patenterteilung: **24.06.2020**
(21) Anmeldenummer: 16766973.8
(22) Anmeldetag: 19.09.2016
(51) Int. Cl.: B61D 23/02

(54) **SCHIENENFAHRZEUG, VERFAHREN ZUR HERSTELLUNG EINES SCHIENENFAHRZEUGS UND VERWENDUNG EINES SCHERENMECHANISMUS IN EINER ZUSTIEGSANORDNUNG**
RAIL VEHICLE, METHOD FOR PRODUCING A RAIL VEHICLE, AND USE OF A SCISSOR MECHANISM IN A BOARDING ARRANGEMENT
VÉHICULE FERROVIAIRE, PROCÉDÉ DE FABRICATION D'UN VÉHICULE FERROVIAIRE ET UTILISATION D'UN MÉCANISME ARTICULÉ DANS UN SYSTÈME DE MONTÉE DANS UN TRAIN

(43) Veröffentlichungstag der Anmeldung: 31.07.2019
(73) Patentinhaber: Stadler Altenrhein AG, 9423 Altenrhein (CH)
(72) Erfinder: SCHMID, Marcel, 9423 Altenrhein (CH); BOSSHART, Alexander, 9423 Altenrhein (CH)
(74) Vertreter: Hepp Wenger Ryffel AG
(86) Internationale Anmeldenummer: PCT/EP2016/072194
(87) Internationale Veröffentlichungsnummer: WO 2018/050257

(56) Entgegenhaltungen:
- DE-C1- 4 220 469
- DE-U1- 20 104 221
- DE-U1-202006 016 432
- FR-A1- 2 873 635
- GB-A- 1 410 615

## Beschreibung

Die vorliegende Erfindung betrifft ein Schienenfahrzeug, ein Verfahren zur Herstellung eines Schienenfahrzeugs und eine Verwendung eines Scherenmechanismus in einer Zustiegsanordnung gemäss den Oberbegriffen der unabhängigen Ansprüche.

Im Schienenverkehr kommen Schienenfahrzeuge in Bahnhöfen an Bahnsteigen zum Stehen. An den Bahnsteigen besteht ein Abstand zwischen dem Zug und dem Bahnsteig. Durch den Abstand besteht ein Spalt zwischen dem Zug und dem Bahnsteig. Um das Risiko zu minimieren, dass Zugpassagiere in diesen Spalt fallen wird üblicherweise von dem Zug ein Trittbrett ausgefahren. Die Passagiere können dann sicher über das Trittbrett in den Zug gelangen.

Eine besondere Herausforderung ergibt sich dadurch, dass nicht nur ein horizontaler Abstand zwischen Zug und Bahnsteig vorhanden ist, sondern auch ein vertikaler. Der vertikale Abstand bezeichnet den Höhenunterschied zwischen Bahnsteig und Schienenfahrzeugboden. Dieser wird massgeblich durch die Höhe des Bahnsteigs beeinflusst, da der Abstand zwischen Schiene und Schienenfahrzeugboden weitgehend konstant ist.

Die Höhe des Bahnsteiges wird durch Normen festgelegt, wobei eine Vielzahl an Normen existiert. Für den europäischen Raum ist beispielsweise die Technische Spezifikation für Interoperabilität (TSI) gültig, während in Russland der GOST (Gossudarstwenny Standart) angewendet wird. Insbesondere der GOST erlaubt grosse Höhenunterschiede zwischen Schienenoberkante und Bahnsteig. So kann dieser Unterschied entweder 1100mm (städtische Bahnhöfe) oder 200mm (ländliche Bahnhöfe) betragen. In der Folge ist variieren die Unterschiede zwischen Bahnsteig und Fahrzeugboden stark und stellen erhöhte Anforderungen an die Flexibilität eines Ausstieges eines Schienenfahrzeug.

KR 2014/0033602 A offenbart einen zweistufigen Schiebetritt zur Verwendung in einem Schienenfahrzeug. Eine zweite Stufe wird durch ein Blockmodul, welches durch eine elektrisch angetriebene Leitspindel in einer Schiene bewegt wird ausgefahren, wobei die erste Stufe anfänglich mit der zweiten Stufe verbunden ist und deshalb mitausgefahren wird. Beim Erreichen der Gebrauchsposition (über der Trittnische) wird die erste Stufe von der zweiten Stufe gelöst und bleibt so in der Gebrauchsposition. Die zweite Stufe muss dann manuell ausgeklappt werden. KR 2014/0033602 hat den Nachteil, dass nur die erste Stufe elektrisch und automatisch angesteuert wird, während die zweite manuell ausgeklappt wird.

KR 2013/0024068 A offenbart einen zweistufigen Schiebetritt zur Verwendung in einem Schienenfahrzeug. Eine erste Stufe wird durch einen Rollmechanismus, einen Triebriemen und einen elektrischen Antrieb ausgefahren, wobei sie im ausgefahren Zustand die Trittnische des Schienenfahrzeuges abdeckt. Die zweite Stufe ist unterhalb der ersten Stufe angebracht und wird über einen pneumatischen Zylinder, zwei Verbindungsmodule, jeweils bestehend aus einer Drehachse und zwei Armen ausgefahren. Bei KR 2013/0024068 wird ein aufwändiger Antrieb verwendet.

US 2004/211336 A offenbart einen Schiebetritt, welche über die Trittnische eines Schienenfahrzeuges und darüber hinaus ausgefahren werden kann. Der Schiebtritt besitzt eine Nase und wird in einem Führungsrahmen (angetrieben durch einen elektrischen Zahnstangenantrieb) aus- und eingefahren. Der Schiebetritt in US 2004/211336 A erlaubt jedoch nur eine geringe Reichweite und unterstützt den Passagier beim Einstiegen folglich nur ungenügend, da nur eine Schiebtrittstufe herausgefahren wird.

US 3,924,545 A zeigt einen Schiebetritt, welcher durch einen elektrisch angetriebenen Schienen-, Kettenmechanismus ein- und ausgefahren werden kann. Der Schiebetritt ist direkt unter einem Fussboden angebracht. US 3,924,545 A ist ebenfalls nur einstufig.

WO 2013/053596 A1 zeigt ein Passagierschienenfahrzeug mit vier unterschiedlichen Einstiegsniveaus. Dabei ist ein Klapptritt für ein erstes Einstiegsniveau vorgesehen, ein Schiebetritt für ein zweites Einstiegsniveau vorgesehen ist, eine Treppe für ein drittes Einstiegsniveau vorgesehen ist, und eine klappbare Rampe für ein viertes Einstiegsniveau vorgesehen. Nachteilig ist die Bedienung der klappbaren Rampe, da diese einen aufwändigen Antrieb erfordert oder gar manuell bedient werden muss.

Es ist daher die Aufgabe der Erfindung, die Nachteile des Standes der Technik zu überwinden. Insbesondere soll eine Vorrichtung zur Verfügung gestellt werden, die einen sicheren Einstieg erlaubt, einfach herstellbar und einfach antreibbar ist.

Diese Aufgabe wird durch die in den unabhängigen Patentansprüchen definierte Vorrichtung, das in den unabhängigen Patentansprüchen definierte Verfahren sowie die Verwendung gelöst. Weitere Ausführungsformen ergeben sich aus den abhängigen Patentansprüchen.

Ein erster Aspekt der vorliegenden Erfindung betrifft ein Schienenfahrzeug. Insbesondere betrifft die Erfindung ein Schienenfahrzeug für den Personenverkehr. Das Schienenfahrzeug umfasst wenigstens eine Schienenfahrzeugaussenwand. Insbesondere umfasst das Schienenfahrzeug wenigstens eine erste Treppenstufe, wobei diese einen Höhenunterschied zwischen einem Schienenfahrzeugfussboden und einem tiefer gelegenen Ausstieg überwindet. Weiterhin umfasst das Schienenfahrzeug eine Zustiegsanordnung mit wenigstens einem ersten Schiebetrittbrett und einem zweiten Schiebetrittbrett. Das erste Schiebetrittbrett ist durch eine Antriebseinheit angetrieben. Dabei sind das erste Schiebetrittbrett und das zweite Schiebetrittbrett lateral schiebbar gelagert. Das erste Schiebetrittbrett und das zweite Schiebetrittbrett sind von je einer Fahrtposition durch eine laterale Ausfahrbewegung in Richtung Schienenfahrzeugaussenwand in je eine Endposition schiebbar. In seiner Endposition ragt das zweite Schiebetrittbrett über das erste Schiebetrittbrett hinaus.

Die Zustiegsanordnung ist im Einstiegsbereich des Schienenfahrzeugs angeordnet.

Die Zustiegsanordnung enthält einen Kopplungsmechanismus zur Kopplung des ersten Schiebetrittbretts und des zweiten Schiebetrittbretts. Die Ausfahrbewegung des ersten Schiebetrittbretts bewirkt über den Kopplungsmechanismus die Ausfahrbewegung des zweiten Schiebetrittbretts.

Die Antriebseinheit ist besonders bevorzugt eine elektrische Einheit wie ein Elektromotor, der die Ausfahrbewegung in einer möglichen Ausführungsform über ein Zahnrad auf die Zustiegsanordnung überträgt. Alternativ kann die Antriebseinheit auch pneumatisch oder hydraulisch ausgestaltet sein. Besonders bevorzugt enthält die Antriebseinheit einen Linearantrieb.

Bevorzugt umfasst das Schienenfahrzeug nur eine einzige Antriebseinheit für das erste und das zweite Schiebetrittbrett. Die Ausfahrbewegung kann dabei kontinuierlich oder intermittierend sein. Die Richtung lateral bezieht sich auf das Schienenfahrzeug. Bevorzugt ist lateral eine Richtung mit einer Komponente die im Wesentlichen rechtwinklig zur Fahrtrichtung des Schienenfahrzeuges zeigt, besonders bevorzugt heisst lateral rechtwinklig zu einer Fahrtrichtung des Schienenfahrzeugs.

Der Schienenfahrzeugfussboden bezeichnet das Niveau eines Bodens eines Innenraumes eines Schienenfahrzeuges.

Das erfindungsgemässe Schienenfahrzeug hat den Vorteil, dass die Schiebetrittbretter mit nur einem Motor angesteuert werden können.

Ein optionaler Vorteil ist, dass grosse Abstände zwischen Schienenfahrzeug und Bahnsteig überwunden werden können dadurch, dass zwei Schiebetrittbretter verwendet werden, wobei gleichzeitig die Bautiefe in Fahrzeugquerrichtung nicht begrenzend wirkt. Ausserdem kann sich der Vorteil ergeben, dass durch den Kopplungsmechanismus die Schiebetrittbretter in der Fahrtposition platzsparend verstaut werden können.

In einer bevorzugten Ausführungsform koppelt der Kopplungsmechanismus die Ausfahrbewegung des ersten Schiebtrittbretts und des zweiten Schiebetrittbretts derart, dass das erste Schiebetrittbrett und das zweite Schiebetrittbrett ihre Endposition simultan erreichen.

Da sich die Schiebetrittbretter simultan bewegen erreichen sie die Endposition schneller als wenn sie sich sequentiell bewegen.

In einer bevorzugten Ausführungsform koppelt der Kopplungsmechanismus die Ausfahrbewegung des ersten Schiebetrittbretts und des zweiten Schiebetrittbretts derart, dass das erste Schiebetrittbrett und das zweite Schiebetrittbrett ihre Fahrtposition simultan verlassen.

Da sich die Schiebetrittbretter simultan bewegen erreichen sie die Endposition schneller als wenn sie sich sequentiell bewegen.

In einer bevorzugten Ausführungsform ist die laterale Ausfahrbewegung des ersten Schiebetrittbretts in einen ersten Abschnitt und einen zweiten Abschnitt unterteilt. Dabei koppelt der Kopplungsmechanismus das erste Schiebetrittbrett und das zweite Schiebetrittbrett derart, dass sich während der Ausfahrbewegung des ersten Schiebetrittbretts im ersten Abschnitt keine Relativbewegung zum zweiten Schiebetrittbrett ergibt.

Dadurch kann ein erster Teil der Ausfahrbewegung durchgeführt werden während eine Fahrzeugtür noch geschlossen ist. In der Folge müssen die Schiebetrittbretter beim Öffnen der Tür nur noch eine kürzere Distanz zurücklegen.

In einer bevorzugten Ausführungsform koppelt der Kopplungsmechanismus das erste Schiebetrittbrett und das zweite Schiebetrittbrett derart, dass sich während der Ausfahrbewegung des ersten Schiebetrittbretts im zweiten Abschnitt eine Relativbewegung zum zweiten Schiebetrittbrett ergibt.

Durch die Kopplung erhöht sich die Geschwindigkeit mit der die Schiebetrittbretter ausgefahren werden können. Weiterhin kann auf einen zweiten Motor oder eine manuelle Bedienung für das zweite Schiebetrittbrett verzichtet werden.

In einer bevorzugten Ausführungsform überdeckt das erste Schiebetrittbrett nach Durchlaufen des ersten Abschnitts der lateralen Ausfahrbewegung die wenigstens erste Treppenstufe in der Draufsicht.

Dadurch wird die Sicherheit im Zug erhöht. Ein Schienenfahrzeugpassagier kann dann nicht die Treppenstufe(n) herunterfallen.

In einer bevorzugten Ausführungsform umfasst der Kopplungsmechanismus wenigstens einen ersten Arm. Der erste Arm ist an einem ersten Ende mit dem ersten Schiebetrittbrett und an einem zweiten Ende mit dem zweiten Schiebetrittbrett verbunden.

Ein Arm ist eine besonders einfache Möglichkeit den Kopplungsmechanismus zu realisieren.

In einer bevorzugten Ausführungsform umfasst der Kopplungsmechanismus einen zweiten Arm, wobei der zweite Arm mit einem Ende mit dem zweiten Schiebetrittbrett verbunden ist. Der erste Arm und der zweite Arm sind drehbar in einer Achse so über Kreuz gelagert, dass der erste Arm und der zweite Arm je einen Scherenhebel eines Scherenmechanismus bilden.

Dadurch bilden der erste und der zweite Arm einen Scherenmechanismus. Der Scherenmechanismus erlaubt beide Schiebetrittbretter mit einem Motor anzutreiben und gleichzeitig eine Relativbewegung zwischen den Schiebetrittbrettern zu erzeugen.

In einer bevorzugten Ausführungsform führt der Kopplungsmechanismus im zweiten Abschnitt der lateralen Ausfahrbewegung des ersten Schiebetrittbretts das erste Ende des ersten Arms und das erste Ende des zweiten Arms zusammen.

Dadurch kann eine Relativbewegung zwischen zwei Schiebetrittbrettern erzeugt werden.

In einer bevorzugten Ausführungsform ist das erste Schiebetrittbrett lateral schiebbar in einer Schiebetrittbrett-Führung gelagert. Der Kopplungsmechanismus umfasst eine Führungsschiene. Das erste Ende des ersten Arms wird in der Führungsschiene geführt und die Führungsschiene verläuft in einem ersten Bereich parallel zur Schiebetrittbrett-Führung des ersten Schiebetrittbretts. Die Führungsschiene verläuft in einem zweiten Bereich in einem Winkel, insbesondere einem spitzen Winkel, zur Schiebetrittbrett-Führung des ersten Schiebetrittbretts.

Die Führungsschiene hat den Vorteil, dass durch sie der Scherenmechanismus gesteuert werden kann. Folglich bestimmt der Verlauf der Führungsschiene die Relativbewegung zwischen den Schiebetrittbrettern.

In einer Ausführungsform wird der zweite Schiebetritt beidseitig in Schiebetrittbrett-Führungen des ersten Schiebetritts geführt.

In einer bevorzugten Ausführungsform umfasst die Zustiegsanordnung weiter einen erste Klappstufe und eine zweite Klappstufe. Die erste Klappstufe und die zweite Klappstufe sind von je einer Fahrposition in je eine Gebrauchsposition bewegbar. Die erste Klappstufe und die zweite Klappstufe bilden in ihrer Gebrauchsposition je eine weitere Treppenstufe.

Durch die erste Klappstufe kann eine zweite Bahnsteighöhe erreicht werden. Durch die zweite Klappstufe kann eine dritte Bahnsteighöhe erreicht werden.

Ein weiterer Aspekt der vorliegenden Erfindung betrifft ein Verfahren zur Herstellung eines Schienenfahrzeugs. Das Verfahren umfasst die folgenden Schritte:
- Bereitstellen wenigstens einer ersten Schienenfahrzeugaussenwand, insbesondere Bereitstellen wenigstens einer ersten Treppenstufe, wobei diese einen Höhenunterschied zwischen einem Schienenfahrzeugfussboden und einem tiefer gelegenen Ausstieg überwindet;
- Bereitstellen wenigstens eines ersten Schiebetrittbretts und eines zweiten Schiebetrittbretts;
- Verschieben des ersten Schiebetrittbretts und des zweiten Schiebetrittbretts von Fahrtpositionen in Endpositionen durch eine laterale Ausfahrbewegung in Richtung einer Schienenfahrzeugaussenwand. Dabei ragt das zweite Schiebetrittbrett in seiner Endposition über das erste Schiebetrittbrett in seiner Endposition hinaus. Eine Antriebseinheit treibt das erste Schiebetrittbrett an.

Die Ausfahrbewegung des ersten Schiebetrittbretts bewirkt über einen Kopplungsmechanismus die Ausfahrbewegung des zweiten Schiebetrittbrettes.

Das erfindungsgemässe Schienenfahrzeug hat den Vorteil, dass die Schiebetrittbretter mit nur einem Motor angesteuert werden können.

Ein optionaler Vorteil ist, dass grosse Abstände zwischen Schienenfahrzeug und Bahnsteig überwunden werden können dadurch, dass zwei Schiebetrittbretter verwendet werden, wobei gleichzeitig die Bautiefe in Fahrzeugquerrichtung nicht begrenzend wirkt. Ausserdem kann sich der Vorteil ergeben, dass durch den Kopplungsmechanismus die Schiebetrittbretter in der Fahrtposition platzsparend verstaut werden können.

Bevorzugt erreichen das erste Schiebetrittbrett und das zweite Schiebetrittbrett beim Ausfahren ihre Endposition simultan.

Bevorzugt verlassen das erste Schiebetrittbrett und das zweite Schiebetrittbrett ihre Fahrtposition simultan.

Da sich die Schiebetrittbretter simultan bewegen erreichen sie die Endposition schneller als wenn sie sich sequentiell bewegen.

Bevorzugt ergibt sich beim Ausfahren des ersten Schiebetrittbretts und des zweiten Schiebetrittbretts im ersten Abschnitt zwischen dem ersten Schiebetrittbrett und dem zweiten Schiebetrittbrett keine Relativbewegung.

Dadurch kann ein erster Teil der Ausfahrbewegung durchgeführt werden während eine Fahrzeugtür noch geschlossen ist. In der Folge müssen die Schiebetrittbretter beim Öffnen der Tür nur noch eine kürzere Distanz zurücklegen.

Bevorzugt ergibt sich beim Ausfahren des ersten Schiebetrittbretts und des zweiten Schiebetrittbretts im zweiten Abschnitt zwischen dem ersten Schiebetrittbrett und dem zweiten Schiebetrittbrett eine Relativbewegung.

Durch die Kopplung erhöht sich die Geschwindigkeit mit der die Schiebetrittbretter ausgefahren werden können. Weiterhin kann auf einen zweiten Motor oder eine manuelle Bedienung für das zweite Schiebetrittbrett verzichtet werden.

Ein weiterer Aspekt der vorliegenden Erfindung betrifft eine Verwendung eines Scherenmechanismus in einer Zustiegsanordnung zum Ausfahren eines zweiten Schiebetrittbretts. Insbesondere wird der Scherenmechanismus in einem Schienenfahrzeug verwendet. Der Scherenmechanismus setzt eine Ausfahrbewegung eines ersten Schiebetrittbretts in eine Ausfahrbewegung des zweiten Schiebetrittbretts um.

Der Scherenmechanismus erlaubt eine bewegliche Verbindung zwischen zwei Schiebetrittbrettern. Dabei können zwei Schiebetrittbretter simultan mit unterschiedlichen Geschwindigkeiten bewegt werden.

Bevorzugt wird der Scherenmechanismus im Fahrzeuginnenraum eines Schienenfahrzeuges verwendet.

Anhand von Figuren, welche lediglich Ausführungsbeispiele darstellen, wird die Erfindung im Folgenden näher erläutert. Es zeigen schematisch:
- Fig. 1:: eine schematische Darstellung eines Schienenfahrzeugs mit einer Schiebetrittanordnung im Einstiegsbereich
- Fig. 2:: eine schematische Darstellung einer Schiebetrittanordnung
- Fig. 3:: eine schematische Darstellung einer Schiebetrittanordnung ohne ein Deckblech
- Fig. 4:: eine schematische Darstellung einer Schiebetrittanordnung in einer Fahrtposition
- Fig.5:: eine schematische Darstellung einer Schiebetrittanordnung am Ende einer ersten Stufe
- Fig.6:: eine schematische Darstellung einer Schiebetrittanordnung am Ende einer zweiten Stufe

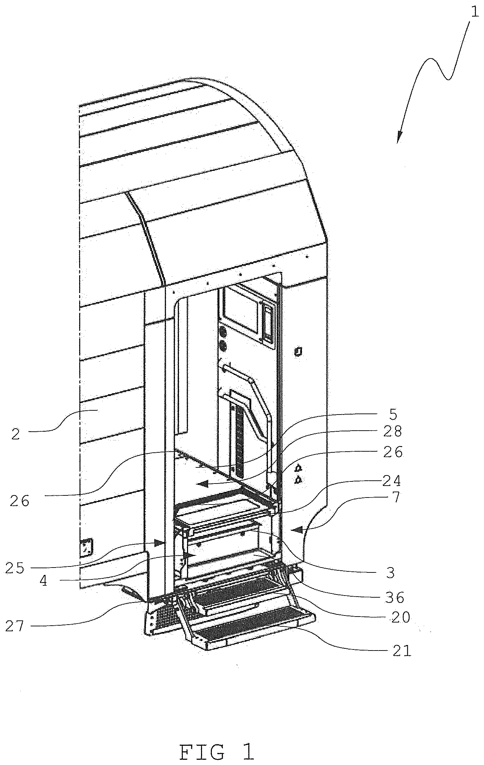

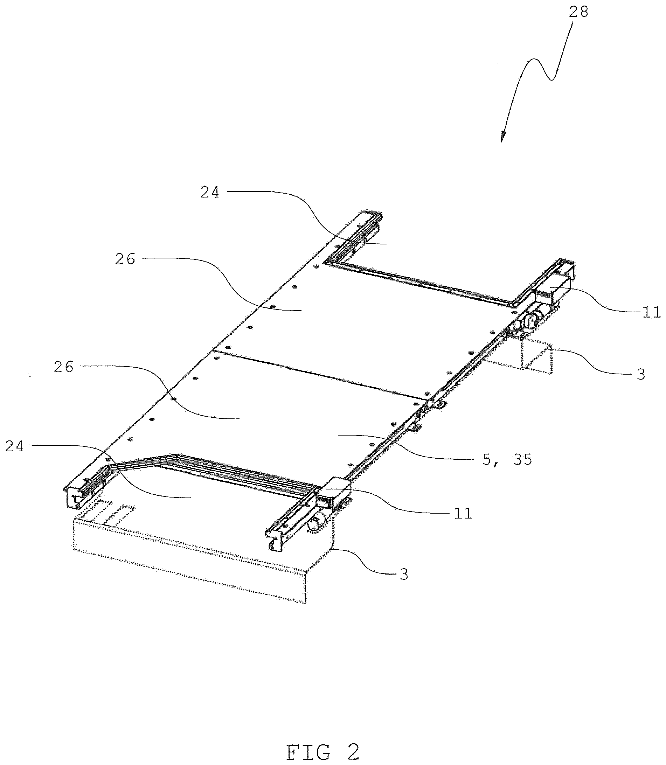

Figur 1 zeigt einen Einstiegsbereich 25 eines Schienenfahrzeuges 1. In einer Aussenwand 2 des Schienenfahrzeugs 1 ist der Einstiegsbereich 25 vorgesehen. Im Einstiegsbereich 25 steigen Passagiere von einem Bahnsteig (nicht gezeigt) in das Schienenfahrzeug 1. Die Passagiere gelangen von dem Bahnsteig zum Schienenfahrzeugfussboden 5. Abhängig von der Höhe des Bahnsteigs benutzen die Passagiere eine Teleskopschiebetrittanordnung 28 oder eine erste Treppenstufe 3 und optional einen Klapptritt 27. Dabei befindet sich die erste Treppenstufe 3 in einer Trittnische 24 der Teleskopschiebetrittanordnung 28. Die Teleskopschiebetrittanordnung 28 enthält zwei Teleskopschiebetritte 26 (siehe auch Fig. 2).

Diese Vorrichtungen ermöglichen dem Passagier einen Höhenunterschied zwischen Bahnsteig und Schienenfahrzeugfussboden zu überwinden. Zusammen bilden der Klapptritt 27, einer der Teleskopschiebetritte 26 und die erste Treppenstufe 3 eine Zustiegsanordnung 7 für das Schienenfahrzeug 1.

Die unterschiedlichen Einstiegshöhen werden durch das Verwenden von unterschiedlichen Stufen erreicht. Tiefe Bahnsteige können erreicht werden durch den Klapptritt 27 in Kombination mit der ersten Treppenstufe 3. In einer Variation für die nächsthöheren Bahnsteige wird der Klapptritt 27 nicht ausgeklappt und die Passagiere treten direkt über die erste Treppenstufe 3 in das Schienenfahrzeug 1 hinein. Falls der Bahnsteig auf derselben Höhe oder einer leicht tieferen oder höheren Höhe als der Schienenfahrzeugfussboden 5 ist, so kann über den Teleskopschiebetritt 26 der Einstieg erleichtert werden.

Um Höhen zu erreichen die unterhalb des Schienenfahrzeugfussbodens 5 sind, ist der Klapptritt 27 vorgesehen. Der Klapptritt 27 enthält 2 Klappstufen 20, 21. Im Gegensatz zum Teleskopschiebetritt 26 sind die Klappstufen 20, 21 ausserhalb eines Schienenfahrzeuginnenraumes angeordnet. In der Fahrtposition werden die Klappstufen 20, 21 an die Schienenfahrzeugaussenwand 2 angeklappt oder unter das Schienenfahrzeug 1 weggeklappt. Bei Ankunft an einem Bahnsteig werden die Klappstufen 20, 21 in einer Drehbewegung aus der der Fahrtposition ausgeklappt. Die Drehung ist dabei um eine Achse, die in Fahrtrichtung des Schienenfahrzeugs 1 zeigt.

Figur 2 zeigt die Teleskopschiebetrittanordnung 28. Die Teleskopschiebetrittanordnung 28 umfasst zwei Teleskopschiebetritte 26. Das Schienenfahrzeug weist auf beiden Aussenseiten je einen Einstiegsbereich 25 auf. Jeder der Einstiegsbereiche 25 verfügt über einen Teleskopschiebetritt 26. Auf der Oberseite der Teleskopschiebetritte 26 ist der Schienenfahrzeugfussboden 5 angeordnet. Beide Teleskopschiebetritte 26 enthalten eine Trittnische 24. In den Trittnischen 24 befindet sich je eine erste Treppenstufe 3 (gestrichelt. Durch die Trittnische 24 kann die erste Treppenstufe 3 erreicht werden. Der Schienenfahrzeugfussboden 5 wird durch ein Deckblech 35 gebildet. Jeder der Teleskopschiebetritte 26 weist eine Antriebseinheit 11 auf. Die Antriebseinheit 11 ist ein Elektromotor.

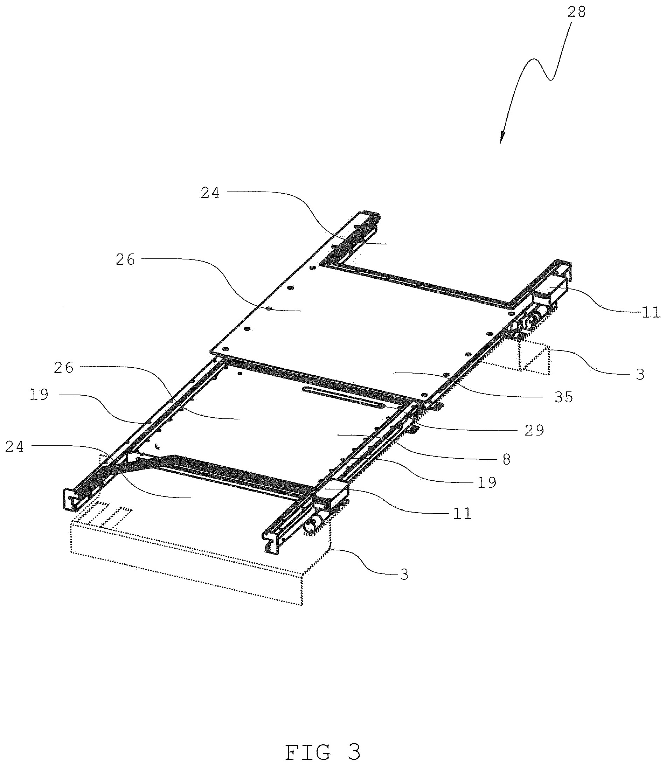

Figur 3 zeigt die Teleskopschiebetrittanordnung 28 aus Figur 2. Einer der Teleskopschiebetritte 26 ist ohne das Deckblech 35 gezeigt. Dadurch wird ein erstes Schiebetrittbrett 8 sichtbar. Das erste Schiebetrittbrett 8 wird durch ein erstes Set Gleitschienen 19 geführt. Der Antrieb 11 treibt das erste Schiebetrittbrett 8 an. Die ersten Gleitschienen 19 für das erste Schiebetrittbrett 8 reichen von einer Schienenfahrzeugmitte bis zur Schienenfahrzeugaussenwand 2 (siehe Figur 1). Der Antrieb 11 ist elektrisch und treibt über ein Zahnrad das erste Schiebetrittbrett 8 an. Durch den Antrieb wird das erste Schiebetrittbrett 8 lateral, das heisst seitlich zur Fahrtrichtung des Schienenfahrzeuges 1, angetrieben. In Figur 3 ist das erste Schiebetrittbrett 8 vollständig unterhalb des nicht gezeigten Deckbleches des Schienenfahrzeugfussbodens 5. Diese Position ist die Fahrtposition.

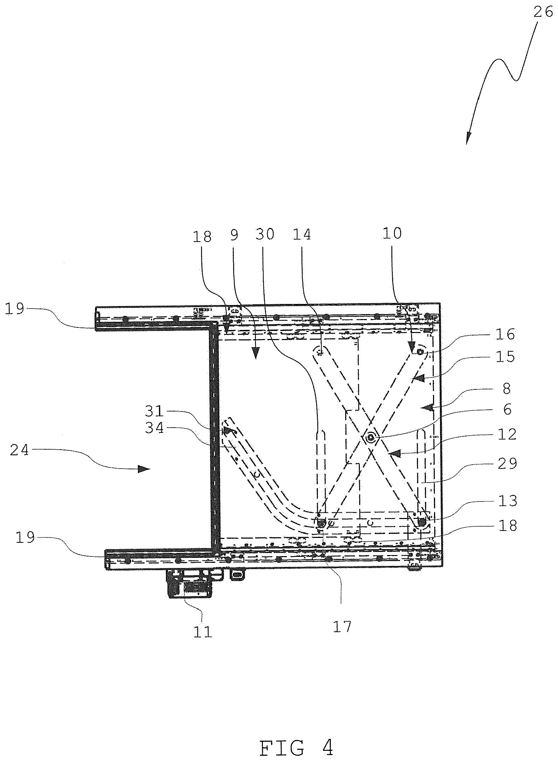

Figur 4, 5 und 6 zeigen eines der Teleskopschiebetritte 26 der Teleskopschiebetrittanordnung 28 aus den Figuren 2 und 3 in einer Draufsicht in verschiedenen Stufen beim Ausfahren des Teleskopschiebetrittes. In der Draufsicht ist der Schienenfahrzeugfussboden 5 durchsichtig gezeichnet, sodass wie in Fig. 3 das erste Schiebetrittbrett 8 sichtbar ist und in gestrichelten Linien gezeichnet ist. Auch das erste Schiebetrittbrett 8 ist durchsichtig gezeichnet. Daher ist in Figur 4 ein zweites Schiebetrittbrett 9 sichtbar. In der in Figur 4 gezeigten Ansicht sind das erste und das zweite Schiebetrittbrett 8, 9 in der Fahrtposition. Das zweite Schiebetrittbrett 9 wird durch ein zweites Set Gleitschienen 18 geführt. Die zweiten Gleitschienen 18 befinden sich an der Unterseite des ersten Schiebetrittbretts 8 und sind fest mit diesem verbunden. Folglich werden das erste Schiebetrittbrett 8 und das zweite Schiebetrittbrett 9 als eine Einheit bereitgestellt. Dabei ist jedoch das zweite Schiebetrittbrett 9 in Relation zum ersten Schiebetrittbrett 8 beweglich.

Die beiden Schiebetrittbretter 8, 9 sind durch einen Kopplungsmechanismus 10 verbunden. Der Kopplungsmechanismus 10 beinhaltet einen ersten Arm 12 und einen zweiten Arm 15. Der erste Arm 12 ist an einem ersten Ende 13 mit dem ersten Schiebetrittbrett 8 verbunden.

Die Verbindung des ersten Endes 13 des ersten Armes 12 mit dem ersten Schiebetrittbrett 8 erfolgt durch einen zylinderförmigen Kopf, der durch ein Langloch 29 des ersten Schiebetrittbretts 8 geführt wird (siehe auch Figur 3). Das Langloch 29 erstreckt sich in Fahrtrichtung des Schienenfahrzeuges 1. Ein Durchmesser des zylinderförmigen Kopfes entspricht im Wesentlichen der Breite des Langloches 29. Bei einer Bewegung durch das Langloch 29 rollt der zylinderförmige Kopf entlang des Langloches 29. Folglich ist das erste Ende 13 des ersten Armes 12 in Fahrtrichtung beweglich während in lateraler Richtung dazu Kräfte über den Rand des Langloches 29 vom ersten Schiebetritt 8 auf den ersten Arm 12 übertragen werden.

An einem zweiten Ende 14 des ersten Armes 12 ist der erste Arm 12 mit dem zweiten Schiebetrittbrett 9 verbunden. Die Verbindung mit dem zweiten Schiebetritt 9 ist drehbar, erlaubt jedoch keine Bewegung in Fahrtrichtung oder lateral dazu.

Der zweite Arm 15 ist in seiner Mitte drehbar über ein Gelenk mit der Mitte des ersten Armes 12 verbunden. Dadurch können sich der erste und der zweite Arm 15 relativ zueinander um eine Achse senkrecht zum Schienenfahrzeugfussboden verdrehen. Diese Bewegung ist entspricht einer Scherenbewegung, wobei die Arme 12, 15 um das Gelenk 6 rotieren und die Scherenarme darstellen.

Weiterhin ist der zweite Arm 15 an einem zweiten Ende 17 mit dem zweiten Schiebetrittbrett 9 verbunden. Das zweite Ende 17 des zweiten Armes 15 greift mit einem weiteren zylinderförmigen Kopf in ein Langloch 30 des zweiten Schiebetrittbrettes 9 ein. Dadurch werden Kräfte in lateraler Richtung vom zweiten Arm 15 auf das zweite Schiebetrittbrett 9 übertragen, während das Langloch 30 eine Bewegung des zweiten Endes 17 des zweiten Armes 15 in Fahrtrichtung zulässt. Ein erstes Ende 16 des zweiten Armes 15 ist mit dem ersten Schiebetrittbrett 8 verbunden. Die Verbindung ist gelenkig, sodass eine Rotationbewegung des zweiten Armes 15 relativ zum ersten Schiebetrittbrett 8 erlaubt wird, jedoch keine Translationsbewegung.

Die Langlöcher 29, 30 erlauben den Armen 12, 15 eine Bewegung relativ zu den jeweiligen Schiebetrittbrettern 8, 9 in Fahrtrichtung des Schienenfahrzeugs 1. In lateraler Richtung werden dahingegen Kräfte übertragen und keine Bewegung zugelassen.

Der erste Arm 12 des Kopplungsmechanismus 10 ist am ersten Ende 13 mit dem ersten Schiebetrittbrett 8 verbunden. Zusätzlich wird der erste Arm 12 an seinem ersten Ende 13 durch eine Führungsschiene, die als Steuerkurve 31 realisiert ist, geführt. Die Steuerkurve 31 ist eine Schiene, die in ihrer Mitte eine Langnut 34 aufweist. Der erste Arm 12 weist auf der gegenüberliegenden Seite des ersten Schiebetrittbretts 8 einen zylinderförmigen Fortsatz auf. Der Fortsatz greift in die Langnut 34 ein und wird dadurch durch die Steuerkurve 31 gelenkt.

Beim Ausfahren des Teleskopschiebetritts 26 gibt es zwei Stufen. In beiden Stufen wird nur das erste Schiebetrittbrett 8 direkt von dem Antrieb 11 angetrieben und bewegt sich in der Folge in Richtung Fahrzeugaussenwand 2 (siehe Fig. 1).

Der zweite Schiebetritt 9 wird durch den Kopplungsmechanismus 10 angetrieben. In dem ersten Abschnitt ist die Steuerungskurve 31 gerade und parallel zu den Gleitschienen 18, 19. Folglich bleibt ein Scherenwinkel 33 zwischen den beiden Armen 12, 15 konstant. Das zweite Ende 17 des zweiten Armes 15 befindet sich in einer Endposition des Langlochs 30. Auch das erste Ende 13 des ersten Armes 12 befindet sich in einer Endposition des Langlochs 29. Die zylinderförmigen Köpfe in den Langlöchern 29, 30 sind in also ihrer äussersten Position und übertragen Kräfte in lateraler Richtung. Die Kräfte in Fahrtrichtung der zweiten Enden 14, 17 heben sich gegenseitig auf oder werden durch die zweiten Gleitschienen 18 aufgenommen. Daher folgt das zweite Schiebetrittbrett 9 der Bewegung des ersten Schiebetrittbretts 8.

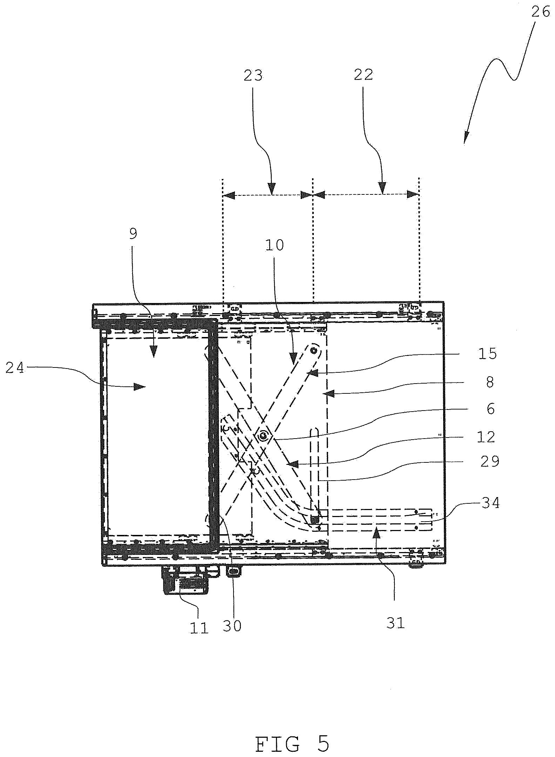

Folglich bewegen sich in der ersten Stufe beide Schiebetritte mit derselben Geschwindigkeit. Es besteht also keine Relativbewegung zwischen den beiden Schiebetrittbrettern 8,9. Eine Position nach dem Ende der ersten Stufe ist in Fig. 5 gezeigt.

Nach dem Ende der ersten Stufe ändert die Steuerkurve ihre Richtung. Die Richtung der Steuerkurve 31 enthält nun eine Komponente entlang der Fahrtrichtung 36 des Schienenfahrzeugs 1. Die Bewegung in Fahrtrichtung des ersten Endes 13 des ersten Armes 12 wird durch das Langloch 29 ermöglicht. Das bedeutet, dass das zylinderförmige Ende des ersten Armes 12 im Langloch 29 ebenfalls in Fahrtrichtung wandert. Die feste Befestigung des zweiten Endes 14 des ersten Armes 12 mit dem Schiebetrittbrett 9 verhindert eine Bewegung in dieser Richtung am zweiten Ende des Armes 12. In der Folge rotiert der erste Arm 12 zusätzlich zur translatorischen Bewegung um das zweite Ende 14. Diese Rotation schiebt das zweite Schiebetrittbrett 9 nach vorne relativ zum ersten Schiebetrittbrett 8.

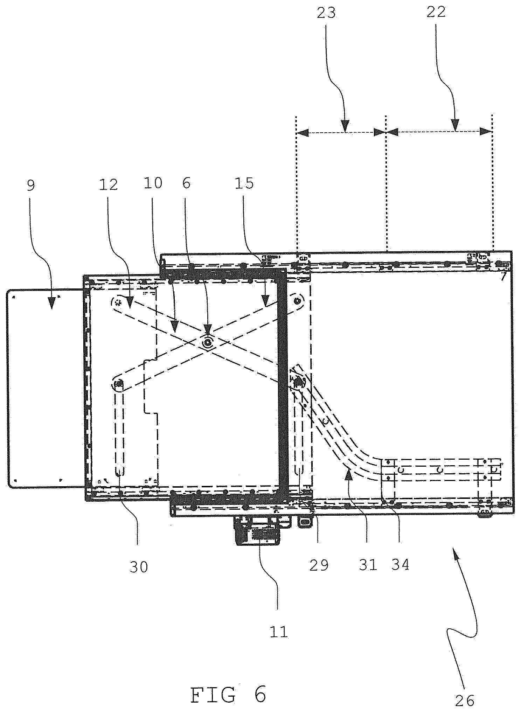

Durch die bewegliche Verbindung des ersten Armes 12 mit dem zweiten Arm 15 verkleinert sich ein Scherenwinkel, sobald sich das erste Ende 13 entlang der Fahrtrichtung 31 des Schienenfahrzeuges bewegt. Die Verkleinerung des Scherenwinkels bedeutet, dass das zweite Schiebetrittbrett 9 in lateraler Richtung relativ zum ersten Schiebetritt nach vorne bewegt. Das zweite Schiebetrittbrett 9 bewegt sich in der zweiten Stufe also schneller als das erste Schiebetrittbrett 8. Das zweite Schiebetrittbrett 9 fährt teleskopartig unter dem ersten Schiebetrittbrett 8 hervor. Eine Endposition, in der das zweite Schiebetrittbrett vollständig ausgefahren ist, ist in Fig. 6 gezeigt. Dies ist das Ende der zweiten Stufe.

In der ersten Stufe wird nur die Trittnische 24 abgedeckt. Die erste Stufe kann in der Folge bei geschlossenen Türen durchfahren werden. Nachdem eine Schienenfahrzeugtür geöffnet wird beginnt die zweite Stufe bei dem Schiebetrittbrett 8 und Schiebetrittbrett 9 teleskopartig ausgefahren zu werden. Mit dem gleichen Mechanismus, wobei der Antrieb in die Gegenrichtung zum Ausfahren arbeitet, kann der Teleskopschiebetritt 26 auch wieder eingefahren werden.

## Patentansprüche

1. Schienenfahrzeug (1), insbesondere ein Schienenfahrzeug für den Personenverkehr, umfassend
wenigstens eine Schienenfahrzeugaussenwand (2);
wenigstens eine erste Treppenstufe (3), wobei diese einen Höhenunterschied (4) zwischen einem Schienenfahrzeugfussboden (5) und einem tiefer gelegenen Ausstieg (36) überwindet; und
eine Zustiegsanordnung (7) mit einem ersten Schiebetrittbrett (8), einem zweiten Schiebetrittbrett (9) und einer Antriebseinheit (11) für das erste Schiebetrittbrett (8), wobei das erste Schiebetrittbrett (8) und das zweite Schiebetrittbrett (9) lateral schiebbar gelagert sind und das erste Schiebetrittbrett (8) und das zweite Schiebetrittbrett (9) von je einer Fahrtposition durch je eine laterale Ausfahrbewegung in Richtung Schienenfahrzeugaussenwand in je eine Endposition schiebbar sind, wobei das zweite Schiebetrittbrett (9) in seiner Endposition über das erste Schiebetrittbrett (8) in seiner Endposition hinaus ragt,
**dadurch gekennzeichnet, dass**
die Zustiegsanordnung einen Kopplungsmechanismus (10) zur Kopplung des ersten Schiebetrittbretts (8) und des zweiten Schiebetrittbretts (9) enthält, wobei die Ausfahrbewegung des ersten Schiebetrittbretts (8) über den Kopplungsmechanismus (10) die Ausfahrbewegung des zweiten Schiebetrittbretts (9) bewirkt.

2. Schienenfahrzeug gemäss Anspruch 1,
wobei
der Kopplungsmechanismus (10) die Ausfahrbewegung des ersten Schiebtrittbretts (8) und des zweiten Schiebetrittbretts (10) derart koppelt, dass das erste Schiebetrittbrett (8) und das zweite Schiebetrittbrett (9) ihre Endposition simultan erreichen.

3. Schienenfahrzeug gemäss Anspruch 1 oder 2,
wobei
der Kopplungsmechanismus (10) die Ausfahrbewegung des ersten Schiebetrittbretts (8) und des zweiten Schiebetrittbretts (9) derart koppelt, dass das erste Schiebetrittbrett (8) und das zweite Schiebetrittbrett (9) ihre Fahrtposition simultan verlassen.

4. Schienenfahrzeug gemäss einem der vorangehenden Ansprüche, wobei die laterale Ausfahrbewegung des ersten Schiebetrittbretts (8) in einen ersten Abschnitt (22) und einen zweiten Abschnitt (23) unterteilt ist, wobei der Kopplungsmechanismus das erste Schiebetrittbrett (8) und das zweite Schiebetrittbrett (9) derart koppelt, dass sich während der Ausfahrbewegung des ersten Schiebetrittbretts (8) im ersten Abschnitt keine Relativbewegung zum zweiten Schiebetrittbrett (9) ergibt.

5. Schienenfahrzeug gemäss Anspruch 4,
wobei der Kopplungsmechanismus (10) das erste Schiebetrittbrett (8) und das zweite Schiebetrittbrett (9) derart koppelt, dass sich während der Ausfahrbewegung des ersten Schiebetrittbretts (8) im zweiten Abschnitt (23) eine Relativbewegung zum zweiten Schiebetrittbrett (9) ergibt.

6. Schienenfahrzeug gemäss einem der vorangehenden Ansprüche, wobei das erste Schiebetrittbrett (8) nach Durchlaufen des ersten Abschnitts (22) der lateralen Ausfahrbewegung die wenigstens erste Treppenstufe in der Draufsicht überdeckt.

7. Schienenfahrzeug gemäss einem der vorangehenden Ansprüche, wobei der Kopplungsmechanismus (10) wenigstens einen ersten Arm (12) umfasst, wobei der erste Arm (12) an einem ersten Ende (13) mit dem ersten Schiebetrittbrett (8) und an einem zweiten Ende (14) mit dem zweiten Schiebetrittbrett (9) verbunden ist.

8. Schienenfahrzeug gemäss Anspruch 7,
wobei der Kopplungsmechanismus einen zweiten Arm (15) umfasst, wobei der zweite Arm bevorzugt mit einem ersten Ende mit dem ersten Schiebetrittbrett verbunden ist und mit einem zweiten Ende (17) mit dem zweiten Schiebetrittbrett (9) verbunden ist, wobei der erste Arm (12) und der zweite Arm (15) drehbar in einer Achse so über Kreuz gelagert sind, dass der erste Arm und der zweite Arm je einen Scherenhebel eines Scherenmechanismus bilden.

9. Schienenfahrzeug gemäss Anspruch 8,
wobei der Kopplungsmechanismus (10) im zweiten Abschnitt (23) der lateralen Ausfahrbewegung des ersten Schiebetrittbretts (8) das erste Ende (13) des ersten Arms (12) und das erste Ende (16) des zweiten Arms (15) zusammen führt.

10. Schienenfahrzeug gemäss einem der Ansprüche 6 bis 9, wobei das erste Schiebetrittbrett (8) lateral schiebbar in einer Schiebetrittbrett-Führung (18) gelagert ist, wobei der Kopplungsmechanismus (10) eine Führungsschiene (19) umfasst, wobei das erste Ende (13) des ersten Arms (12) in der Führungsschiene (19) geführt wird, wobei die Führungsschiene (19) in einem ersten Bereich parallel zur Schiebetrittbrett-Führung (18) des ersten Schiebetrittbrett (8) verläuft, wobei die Führungsschiene (19) in einem zweiten Bereich in einem Winkel, insbesondere einem spitzen Winkel, zur Schiebetrittbrett-Führung (18) des ersten Schiebetrittbrett (8) verläuft.

11. Schienenfahrzeug (1) nach einem der vorangehenden Ansprüche, wobei
die Zustiegsanordnung (7) weiter einen erste Klappstufe (20) und eine zweite Klappstufe (21) umfasst, wobei die erste Klappstufe (20) und die zweite Klappstufe (21) je von einer Fahrposition in eine Gebrauchsposition bewegbar sind, wobei die erste Klappstufe und die zweite Klappstufe in ihrer Gebrauchsposition je eine weitere Treppenstufe bilden.

12. Verfahren zur Herstellung eines Schienenfahrzeugs (1), insbesondere eines Schienenfahrzeugs gemäss einem der vorangehenden Ansprüche, umfassend die folgenden Schritte:
Bereitstellen wenigstens einer ersten Schienenfahrzeugaussenwand (2); Bereitstellen wenigstens einer ersten Treppenstufe (3), wobei diese einen Höhenunterschied (4) zwischen einem Schienenfahrzeugfussboden (5) und einem tiefer gelegenen Ausstieg (36) überwindet;
Bereitstellen einer Zustiegsanordnung (7) mit einem ersten Schiebetrittbrett (8), einem zweiten Schiebetrittbrett (9); wobei das Verschieben des ersten Schiebetrittbretts (8) und des zweiten Schiebetrittbretts (9) von Fahrtpositionen in Endpositionen durch eine laterale Ausfahrbewegung in Richtung einer Schienenfahrzeugaussenwand (2), wobei das zweite Schiebetrittbrett (9) in seiner Endposition über das erste Schiebetrittbrett (8) in seiner Endposition hinaus ragt, wobei
eine Antriebseinheit bereitgestellt wird, welche das erste Schiebetrittbrett (8) antreibt, **dadurch gekennzeichnet, dass** ein Kopplungsmechanismus bereitgestellt wird, über welchen die Ausfahrbewegung des ersten Schiebetrittbretts (8) über den Kopplungsmechanismus (10) die Ausfahrbewegung des zweiten Schiebetrittbretts (9) bewirkt.

13. Verfahren gemäss Anspruch 12,
wobei das erste Schiebetrittbrett (8) und das zweite Schiebetrittbrett (9) beim Ausfahren ihre Endposition simultan erreichen.

14. Verfahren gemäss einem der Ansprüche 12 oder 13,
wobei das erste Schiebetrittbrett (8) und des zweite Schiebetrittbrett (9) ihre Fahrtposition simultan verlassen.

15. Verfahren gemäss einem der Ansprüche 12 bis 14,
wobei beim Ausfahren des ersten Schiebetrittbretts (8) und des zweiten Schiebetrittbretts (9) in einem ersten Abschnitt (22) zwischen dem ersten Schiebetrittbrett (8) und dem zweiten Schiebetrittbrett (9) keine Relativbewegung ergibt.

16. Verfahren gemäss einem der Ansprüche 12 bis 15,
wobei sich beim Ausfahren des ersten Schiebetrittbretts (8) und des zweiten Schiebetrittbretts (9) im zweiten Abschnitt (23) zwischen dem ersten Schiebetrittbrett (8) und dem zweiten Schiebetrittbrett (9) eine Relativbewegung ergibt.

17. Zustiegsanordnung (7) für ein Schienenfahrzeug, insbesondere für ein Schienenfahrzeug nach einem der Ansprüche 1 bis 11, mit einem ersten Schiebetrittbrett (8), einem zweiten Schiebetrittbrett (9) und einer Antriebseinheit (11) für das erste Schiebetrittbrett, wobei das erste Schiebetrittbrett (8) und das Zweite Schiebetrittbrett (9) lateral gelagert sind und das erste Schiebetrittbrett und das zweite Schiebetrittbrett von je einer Fahrtposition durch je eine Ausfahrbewegung in je eine Endposition schiebbar sind, wobei das zweite Schiebetrittbrett (9) in seiner Endposition über das erste Schiebetrittbrett (8) hinausragt, wobei die Zustieganordnung einen Kopplungsmechanismus (10) zur Kopplung des ersten Schiebetrittbretts (8) und des zweiten Schiebetrittbretts (9) enthält, wobei der Kopplungsmechanismus ein Scherenmechanismus ist, der eine Ausfahrbewegung eines ersten Schiebetrittbretts (8) in eine Ausfahrbewegung des zweiten Schiebetrittbretts (9) umsetzt.

## Claims

1. A rail vehicle (1), in particular a rail vehicle for passenger transport, comprising
at least one rail vehicle outer wall (2);
at least a first step (3), wherein this step overcomes a height difference (4) between a rail vehicle floor (5) and
a lower exit (36); and
a boarding arrangement (7) having a first sliding footboard (8), a second sliding footboard (9) and a drive unit (11) for the first sliding footboard (8), wherein the first sliding footboard (8) and the second sliding footboard (9) are supported so as to be able to slide laterally and the first sliding footboard (8) and the second sliding footboard (9) both being pushable from a travel position by means of a lateral deployment movement in the direction of the rail vehicle outer wall into an end position, wherein the second sliding footboard (9) in the end position thereof protrudes beyond the first sliding footboard (8) in the end position thereof,
**characterized in that**
the boarding arrangement contains a coupling mechanism (10) for coupling the first sliding footboard (8) and the second sliding footboard (9), wherein the deployment movement of the first sliding footboard (8) brings about via the coupling mechanism (10) the deployment movement of the second sliding footboard (9).

2. The rail vehicle as claimed in claim 1,
wherein the coupling mechanism (10) couples the deployment movement of the first sliding footboard (8) and the second sliding footboard (10) in such a manner that the first sliding footboard (8) and the second sliding footboard (9) reach their end position simultaneously.

3. The rail vehicle as claimed in claim 1 or 2,
wherein the coupling mechanism (10) couples the deployment movement of the first sliding footboard (8) and the second sliding footboard (9) in such a manner that the first sliding footboard (8) and the second sliding footboard (9) leave their travel position simultaneously.

4. The rail vehicle as claimed in one of the preceding claims, wherein the lateral deployment movement of the first sliding footboard (8) is subdivided into a first portion (22) and a second portion (23), wherein the coupling mechanism couples the first sliding footboard (8) and the second sliding footboard (9) in such a manner that, during the deployment movement of the first sliding footboard (8), in the first portion no relative movement is produceable with respect to the second sliding footboard (9).

5. The rail vehicle as claimed in claim 4,
wherein the coupling mechanism (10) couples the first sliding footboard (8) and the second sliding footboard (9) in such a manner that, during the deployment movement of the first sliding footboard (8), in the second portion (23) a relative movement is produceable with respect to the second sliding footboard (9).

6. The rail vehicle as claimed in one of the preceding claims, wherein the first sliding footboard (8) after passing through the first portion (22) of the lateral deployment movement covers the at least first step when viewed from above.

7. The rail vehicle as claimed in one of the preceding claims, wherein the coupling mechanism (10) comprises at least a first arm (12), wherein the first arm (12) is connected at a first end (13) to the first sliding footboard (8) and at a second end (14) to the second sliding footboard (9).

8. The rail vehicle as claimed in claim 7,
wherein the coupling mechanism comprises a second arm (15), wherein the second arm is preferably connected with a first end to the first sliding footboard and with a second end (17) to the second sliding footboard (9), wherein the first arm (12) and the second arm (15) are rotatably supported in an axle in such a crosswise manner that the first arm and the second arm form a respective scissor lever of a scissor mechanism.

9. The rail vehicle as claimed in claim 8,
wherein, in the second portion (23) of the lateral deployment movement of the first sliding footboard (8), the coupling mechanism (10) guides the first end (13) of the first arm (12) and the first end (16) of the second arm (15) together.

10. The rail vehicle as claimed in one of claims 6 to 9,
wherein the first sliding footboard (8) is supported so as to be able to slide laterally in a sliding footboard guide (18), wherein the coupling mechanism (10) comprises a guide rail (19), wherein the first end (13) of the first arm (12) is guided in the guide rail (19), wherein the guide rail (19) extends in a first region parallel with the sliding footboard guide (18) of the first sliding footboard (8), wherein the guide rail (19) extends in a second region at an angle, in particular at an acute angle, with respect to the sliding footboard guide (18) of the first sliding footboard (8).

11. The rail vehicle (1) as claimed in one of the preceding claims, wherein
the boarding arrangement (7) further comprises a first folding step (20) and a second folding step (21), wherein the first folding step (20) and the second folding step (21) can be moved from a travel position into a position for use, wherein the first folding step and the second folding step form in the position for use thereof another step.

12. A method for producing a rail vehicle (1), in particular a rail vehicle as claimed in one of the preceding claims, comprising the following steps:
providing at least a first rail vehicle outer wall (2);
providing at least a first step (3), wherein the step overcomes a height difference (4) between a rail vehicle floor (5) and a lower exit (36);
providing a boarding arrangement (7) with a first sliding footboard (8), a second sliding footboard (9);
wherein the displacement of the first sliding footboard (8) and the second sliding footboard (9) from travel positions into end positions by means of a lateral deployment movement in the direction of a rail vehicle outer wall (2), wherein the second sliding footboard (9) protrudes in the end position thereof beyond the first sliding footboard (8) in the end position thereof, wherein a drive unit is provided, which drives the first sliding footboard (8), **characterized in that** a coupling mechanism is provided, by means of which the deployment movement of the first sliding footboard (8) brings about the deployment movement of the second sliding footboard (9) via the coupling mechanism (10) .

13. The method as claimed in claim 12,
wherein the first sliding footboard (8) and the second sliding footboard (9) reach the end position thereof simultaneously when deployed.

14. The method as claimed in one of claims 12 or 13,
wherein the first sliding footboard (8) and the second sliding footboard (9) leave the travel position thereof simultaneously.

15. The method as claimed in one of claims 12 to 14,
wherein, when the first sliding footboard (8) and the second sliding footboard (9) are deployed, in a first portion (22) no relative movement is produced between the first sliding footboard (8) and the second sliding footboard (9).

16. The method as claimed in one of claims 12 to 15,
wherein, when the first sliding footboard (8) and the second sliding footboard (9) are deployed, in the second portion (23) a relative movement is produced between the first sliding footboard (8) and the second sliding footboard (9).

17. A boarding arrangement (7) for a rail vehicle, in particular in a rail vehicle as claimed in one of the claims 1 to 11, a first sliding footboard (8), a second sliding footboard (9) and a drive unit (11) for the first sliding footboard (8), wherein the first sliding footboard (8) and the second sliding footboard (9) are supported so as to be able to slide laterally and the first sliding footboard (8) and the second sliding footboard (9) both are pushable from a travel position by means of a lateral deployment movement in the direction of the rail vehicle outer wall into an end position, wherein the second sliding footboard (9) in the end position thereof protrudes beyond the first sliding footboard (8) in the end position thereof,
wherein the boarding arrangement contains a coupling mechanism (10) for coupling the first sliding footboard (8) and the second sliding footboard (9), wherein the coupling mechanism is a scissor mechanism, which converts a deployment movement of a first sliding footboard (8) into a deployment movement of the second sliding footboard (9).

## Revendications

1. Véhicule ferroviaire (1), en particulier un véhicule ferroviaire pour le transport de passagers, comprenant
au moins une paroi extérieure du véhicule ferroviaire (2); au moins une première marche (3), ladite marche surmontant une différence de hauteur (4) entre un plancher de véhicule ferroviaire (5) et une sortie inférieure (36)
un dispositif d'accès (7) avec un premier marchepied coulissant (8), un deuxième marchepied coulissant (9) et une unité d'entraînement (11) pour le premier marchepied coulissant (8), dans lequel la première marchepied coulissante (8) et la deuxième marchepied coulissante (9) sont montées de manière à pouvoir coulisser latéralement et la première marchepied coulissante (8) et la deuxième marchepied coulissante (9) chacune est coulissant d'une position de déplacement respective par un mouvement d'extension latérale respectif en direction de la paroi extérieure du véhicule ferroviaire dans une position finale respective, la deuxième marchepied coulissante (9) dépassant dans sa position finale la première marchepied coulissante (8),
**caractérisé en ce que**
le dispositif d'accès comprend un mécanisme de couplage (10) pour coupler le premier marchepied coulissant (8) et le deuxième marchepied coulissant (9), dans lequel le mouvement d'extension du premier marchepied coulissant (8) provoque le mouvement d'extension du deuxième marchepied coulissant (9) par l'intermédiaire du mécanisme de couplage (10) .

2. Véhicule ferroviaire selon la revendication 1,
où le mécanisme de couplage (10) couple le mouvement d'extension du premier marchepied coulissant (8) et du deuxième marchepied coulissant (10) de telle sorte que le premier marchepied coulissant (8) et le deuxième marchepied coulissant (9) atteignent simultanément leur position finale.

3. Véhicule ferroviaire selon une des revendications 1 ou 2, où le mécanisme de couplage (10) couple le mouvement d'extension de la première marchepied coulissante (8) et de la deuxième marchepied coulissante (9) de telle sorte que la première marchepied coulissante (8) et la deuxième marchepied coulissante (9) quittent simultanément leur position de conduite.

4. Véhicule ferroviaire selon l'une des revendications précédentes, dans lequel le mouvement d'extension latérale du premier marchepied coulissant (8) est divisé en une première section (22) et une deuxième section (23), le mécanisme couplage couplant le premier marchepied coulissant (8) et le deuxième marchepied coulissant (9) de telle sorte qu'aucun mouvement relatif au deuxième marchepied coulissant (9) ne se produise dans la première section pendant le mouvement d'extension du premier marchepied coulissant (8).

5. Véhicule ferroviaire selon la revendication 4,
dans lequel le mécanisme de couplage (10) accouple la première marchepied coulissante (8) et la deuxième marchepied coulissante (9) de telle sorte que, lors du mouvement d'extension de la première marchepied coulissante (8), un mouvement par rapport à la deuxième marchepied coulissante (9) entraîne la deuxième section (23).

6. Véhicule ferroviaire selon l'une des revendications précédentes, dans lequel le premier marchepied coulissant (8), après avoir traversé la première partie (22) du mouvement d'extension latérale, couvre au moins la première marche dans la vue en plan.

7. Véhicule ferroviaire selon l'une des revendications précédentes, le mécanisme de couplage (10) comprenant au moins un premier bras (12), le premier bras (12) étant relié à une première extrémité (13) au premier marchepied coulissant (8) et à une deuxième extrémité (14) au deuxième marchepied coulissant (9).

8. Véhicule ferroviaire selon la revendication 7, le mécanisme de couplage comprend un deuxième bras (15), le deuxième bras étant de préférence relié par une première extrémité au premier marchepied coulissant et étant relié par une deuxième extrémité (17) au deuxième repose-pied coulissant (9), le premier bras (12) et le deuxième bras (15) étant croisés de manière rotative dans un axe tel que le premier bras et le deuxième bras forment chacun un levier à ciseaux d'un mécanisme à ciseaux.

9. Véhicule ferroviaire selon la revendication 8,
dans lequel le mécanisme d'accouplement (10) réunit la première extrémité (13) du premier bras (12) et la première extrémité (16) du second bras (15) dans la seconde partie (23) du mouvement d'extension latérale du premier marchepied coulissant (8).

10. véhicule ferroviaire selon l'une des revendications 6 à 9, dans lequel le premier marchepied coulissant (8) est monté de manière à pouvoir coulisser latéralement dans un guide de marchepied coulissant (18), dans lequel le mécanisme de couplage (10) comprend un rail de guidage (19), dans lequel la première extrémité (13) du premier bras (12) est guidée dans le rail de guidage (19), dans lequel le rail de guidage (19) s'étend dans une première zone parallèlement au guide (18) de la première marchepied coulissante (8), dans lequel le rail de guidage (19) s'étend dans une deuxième zone sous un angle, en particulier un angle aigu, par rapport au guide (18) de la première marchepied coulissante (8).

11. Véhicule ferroviaire (1) selon l'une des revendications précédentes, dans lequel le dispositif d'accès (7) comprend en outre une première marche pliante (20) et une deuxième marche pliante (21), la première marche pliante (20) et la deuxième marche pliante (21) étant chacune mobile d'une position de conduite à une position d'utilisation, la première marche pliante et la deuxième marche pliante dans leur position d'utilisation formant chacune une autre marche d'escalier.

12. Méthode de fabrication d'un véhicule ferroviaire (1), en particulier d'un véhicule ferroviaire selon l'une des revendications précédentes, comprenant les étapes suivantes:
Prévoir au moins une première paroi extérieure (2) d'un véhicule ferroviaire;
prévoir au moins une première marche (3) pour surmonter une différence de hauteur (4) entre un plancher (5) d'un véhicule ferroviaire et une sortie inférieure (36);
prévoir un dispositif d'accès comprenant une première marche coulissante (8), une deuxième marche coulissante (9), dans lequel le déplacement de la première marche coulissante (8) et de la deuxième marche coulissante (9) de positions de déplacement à des positions finales est obtenu par un mouvement d'extension latérale en direction d'une paroi extérieure (2) du véhicule ferroviaire, dans lequel la deuxième marche coulissante (9), dans sa position finale, dépasse la première marche coulissante (8) dans sa position finale, dans lequel
il est prévu une unité d'entraînement qui entraîne le premier marchepied coulissant (8), **caractérisé en ce qu'**il est prévu un mécanisme de couplage par lequel le mouvement d'extension du premier marchepied coulissant (8) provoque le mouvement d'extension du deuxième marchepied coulissant (9) par l'intermédiaire du mécanisme de couplage (10).

13. Méthode selon la revendication 12, dans laquelle le premier marchepied coulissant (8) et le second marchepied coulissant (9) atteignent simultanément leur position finale lorsqu'ils sont déployés.

14. Méthode selon l'une des revendications 12 ou 13, dans lequel le premier marchepied coulissant (8) et le second marchepied coulissant (9) quittent simultanément leur position de conduite.

15. Méthode selon l'une des revendications 12 à 14, dans lequel lorsque la première marchepied coulissante (8) et la deuxième marchepied coulissante (9) sont étendues dans une première section (22) entre la première marchepied coulissante (8) et la deuxième marchepied coulissante (9), aucun mouvement relatif ne se produit.

16. Méthode selon l'une des revendications 12 à 15,
dans laquelle, lorsque la première marchepied coulissante (8) et la deuxième marchepied coulissante (9) sont étendues, un mouvement relatif est produit dans la deuxième section (23) entre la première marchepied coulissante (8) et la deuxième marchepied coulissante (9).

17. Dispositif d'accès (7) pour un véhicule ferroviaire, en particulier pour un véhicule ferroviaire selon l'une des revendications 1 à 11, comprenant un premier marchepied coulissant (8), un deuxième marchepied coulissant (9) et et une unité d'entraînement (11) pour le premier marchepied coulissant, le premier marchepied coulissant (8) et le deuxième marchepied coulissant (9) sont montées de manière à pouvoir coulisser latéralement et la première marchepied coulissante (8) et la deuxième marchepied coulissante (9) chacune est coulissant d'une position de déplacement respective par un mouvement d'extension latérale respectif en direction de la paroi extérieure du véhicule ferroviaire dans une position finale respective, la deuxième marchepied coulissante (9) dépassant dans sa position finale la première marchepied coulissante (8),
dans lequel le dispositif d'accès comprend un mécanisme de couplage (10) pour coupler le premier marchepied coulissant (8) et le deuxième marchepied coulissant (9), dans lequel le mécanisme de couplage est un mécanisme à ciseaux qui convertit un mouvement d'extension d'un premier marchepied coulissant (8) en un mouvement d'extension du deuxième marchepied coulissant (9).
